# DEMANDE DE BREVET EUROPEEN

(11) **EP 3 945 345 A1**
(43) Date de publication de la demande: **02.02.2022**
(21) Numéro de dépôt: 21187646.1
(22) Date de dépôt: 26.07.2021
(51) Int. Cl.: G01S 13/92, G01S 13/86, G01S 7/295, G08G 1/04

(54) **PROCÉDÉ DE CONTRÔLE DE VÉHICULE PAR PLUSIEURS CAPTEURS**

(30) Priorité: 31.07.2020 FR 2008190
(71) Demandeur: Idemia Identity & Security France, 92400 Courbevoie (FR)
(72) Inventeur: ALLIOT, Samuel, 92400 COURBEVOIE (FR); CARRION, Grégoire, 92400 COURBEVOIE (FR); GUIDON, Eric, 92400 COURBEVOIE (FR); FOUGEROUX, Nicolas, 92400 COURBEVOIE (FR)
(74) Mandataire: Regimbeau

(57) **Abrégé**

L'invention concerne un procédé de contrôle de véhicules sur un axe routier par un système comprenant au moins un capteur radar et un second capteur différent du capteur radar, dans lequel le second capteur de télédétection est un capteur optique temps de vol ou capteur optique d'images, le procédé comprenant un recalage temporel et une mise en correspondance spatiale (S3) pour obtenir un ensemble de points de mesure affectés chacun avec des premières caractéristiques dérivées des données radar et des deuxièmes caractéristiques dérivées des données optiques, la détermination de pistages radar de véhicule (S4) et de pistages optiques de véhicule (S5), une comparaison de similarité (S6) entre les pistages radar de véhicule et les pistages optiques de véhicule, l'élimination (S7) des pistages radar de véhicule pour lesquels aucun pistage optique de véhicule n'est similaire, le procédé comprenant le contrôle (S8) d'un paramètre dérivé de premières caractéristiques d'un pistage radar de véhicule conservé.

## Description

### Domaine technique

La présente invention appartient au domaine du contrôle de véhicule sur une voie de circulation routière, et porte plus précisément sur un procédé de contrôle de véhicules sur un axe routier par un système de contrôle de véhicules comprenant au moins un capteur radar, le système étant disposé fixe en-dehors des voies de circulation de l'axe routier.

### Arrière-Plan technologique

Le contrôle de véhicules consiste à surveiller des véhicules circulant sur des voies de circulation d'un axe routier, et à contrôler un paramètre de circulation d'un véhicule afin de vérifier si ce paramètre de circulation est en accord avec un règlement concernant celui-ci. L'exemple le plus courant de paramètre de circulation est la vitesse des véhicules, et le contrôle de véhicules consiste alors à vérifier que la vitesse de chaque véhicule est inférieure à un seuil. D'autres paramètres de circulation peuvent être contrôlés. Par exemple, dans le cas du contrôle de franchissement de ligne ou de respect de feux de circulation, un paramètre de circulation contrôlé peut être la position du véhicule, celui-ci ne devant pas se trouver à certains endroits à certains moments. Puisque le contrôle de véhicule vise à détecter des infractions et donc à établir des contraventions à l'encontre des véhicules dont le paramètre de circulation contrôlé a présenté une valeur non autorisée, celui-ci doit donc reposer sur des mesures très précises. Typiquement, les incertitudes de mesure doivent être inférieures à des tolérances sur le contrôle du paramètre de circulation. Par exemple, sur le contrôle de la vitesse, cette tolérance peut être de 3 km/h en-dessous de 100 km/h et 3% au-dessus de 100 km/h. En outre, le contrôle doit être rapide, afin de permettre éventuellement la mise en œuvre d'une action telle que l'émission d'un flash afin d'acquérir une image montrant le véhicule en train de commettre l'infraction.

Du fait de sa facilité d'utilisation et de la précision de ses mesures de vitesse, un radar de contrôle routier est l'instrument privilégié pour mesurer la vitesse des véhicules circulant sur un axe routier à l'aide d'ondes électromagnétiques avec une longueur d'onde de l'ordre du centimètre. Un radar utilise le principe de l'effet Doppler pour mesurer la vitesse. Il émet une onde entretenue (ou continue) dans un champ de détection radar qui est réfléchie par tout objet se trouvant dans le champ de détection radar. Par effet Doppler, cette onde réfléchie possède une fréquence légèrement différente de celle émise : plus grande fréquence pour les objets s'approchant du radar et plus petite pour ceux s'éloignant. En mesurant la différence de fréquence entre l'onde émise et celle retournée, on peut calculer la vitesse d'un objet cible tel qu'un véhicule. Ceci se fait en trouvant le battement entre les deux ondes. Une mesure sur la position est apportée par la mesure du temps de vol de l'onde, qui permet d'obtenir la distance entre le radar et le véhicule cible qui a réfléchie l'onde. La mesure de distance est complétée par une mesure d'angle du véhicule cible réalisée en mesurant un déphasage entre les signaux reçus sur au moins deux antennes. La connaissance sur la position permet par exemple de mettre en œuvre des contrôles de franchissement de ligne ou de feu de circulation routière.

Le radar est l'instrument le plus couramment employé pour le contrôle de véhicules en circulation, grâce à ses qualités. Le radar présente en effet comme avantage d'offrir une longue portée, une très bonne discrimination en vitesse grâce à l'effet Doppler, une bonne discrimination en distance grâce au temps de vol, et une très bonne robustesse aux conditions environnementales. Le radar souffre toutefois de plusieurs défauts qui limitent certaines exploitations.

Dans un champ de détection large se créent de multiples rebonds entre des véhicules ou entre les véhicules et l'environnement. Ces multiples rebonds peuvent créer des fausses détections, c'est-à-dire de faux pistages d'un véhicule. Il est alors nécessaire de filtrer les pistages pour éliminer les pistages pouvant correspondre à de faux pistages, au détriment d'un bon rendement de détection. Concrètement, cela revient à identifier deux pistages correspondant à des véhicules proches avec des vitesses proches, et à en supprimer au moins un (typiquement le plus éloigné) soit les deux. Des véhicules peuvent ainsi parfois ne pas être contrôlés.

En outre, il est en général nécessaire de disposer d'un nombre significatif de mesures pour qu'un pistage puisse confirmer une trajectoire (et donc une position) avec précision. Le radar souffre en effet d'une faible résolution angulaire, et d'une faible cadence de rafraîchissement en raison du grand nombre d'échos à traiter dans son large champ de détection. Le pistage radar est ainsi rendu difficile à proche distance, et le contrôle de véhicule en est retardé, ce qui peut être problématique par exemple lorsque le contrôle se fait par l'arrière des véhicules qui s'éloignent.

De plus, l'effet Doppler sur lequel repose le radar n'apparaît pas lorsqu'un véhicule est à l'arrêt. Un véhicule à l'arrêt est donc bien plus difficile à dissocier de l'environnement statique. Il faut alors faire un traitement basique du type à partir du pistage du véhicule en mouvement en recollant dans le temps les phases d'arrêt et de redémarrage. Ce recollement n'est pas robuste à des piétons ou des vélos qui viennent croiser le véhicule à l'arrêt. Il peut donc y avoir des pertes de pistage en cas d'arrêt de véhicules, empêchant ainsi par exemple le contrôle d'interdiction d'arrêt dans des zones spécifiques.

Enfin, il peut être avantageux de pouvoir déterminer le type ou la classe d'un véhicule, afin de pouvoir procéder à des contrôles spécifiques en fonction de cette classe. Par exemple, les véhicules poids-lourds peuvent être soumis à des limites de vitesse plus basses que les véhicules légers, ou encore certaines classes de véhicules peuvent être soumises à des interdictions de circulation dans des voies spécifiques ou des interdictions de dépasser tandis que d'autres classes de véhicules n'y sont pas soumises. Le radar ne permet qu'une classification approximative des véhicules, basée sur le nombre d'échos reçus et leurs intensités.

Des systèmes comprenant au moins un capteur optique et un capteur radar ont été proposés afin d'augmenter la fiabilité de détection de vitesse de véhicules. La demande de brevet US2015/219758 propose un système de génération de données vidéo qui comprend un système radar mobile configuré pour générer des trames de données radar comprenant des données pour un ou plusieurs véhicules, un système vidéo mobile configuré pour générer des trames de données vidéo incluant des données de vitesse pour un ou plusieurs véhicules et un système de rotation de plan dynamique couplé au système radar mobile et configuré pour mapper les trames verticalement inclinées de données radar sur un plan plat parallèle à une route pour générer des données cartographiées pour un ou plusieurs véhicules incluant les données de vitesse radar affiché à côté de l'emplacement du véhicule dans les données vidéo. Aussi, la demande de brevet DE 102010012811 décrit un procédé pour mesurer des vitesses et attribuer des vitesses mesurées aux véhicules appropriés en ayant recours à un capteur de suivi d'objet (par exemple un scanner laser ou un radar) et un capteur de suivi d'image (par exemple une caméra). Ces approches proposent de seulement considérer les pistages corrélés entre eux, ce qui revient donc à perdre des données et à ne pas contrôler certains véhicules.

### Présentation de l'invention

L'invention a pour but de remédier au moins en partie à ces inconvénients et préférentiellement à tous, et vise notamment à proposer un procédé de contrôle de véhicules sur un axe routier par un système comprenant au moins un capteur radar et un capteur optique, afin de pallier les limitations de la technologie doppler mise en œuvre par le radar. En particulier, l'utilisation d'un capteur lidar ou d'un capteur d'images en tant que capteur optique permet d'améliorer le pistage des véhicules en élimant les faux pistages causés par des multiples rebonds de l'onde du radar.

A cet effet, il est proposé un procédé de contrôle de véhicules sur un axe routier comprenant au moins deux voies de circulation, par un système de contrôle de véhicules disposé fixe et comprenant au moins un capteur radar et un second capteur de télédétection différent du capteur radar, le capteur radar opérant sur un champ de détection radar de l'axe routier couvrant au moins deux voies de circulation et émettant un flux de données radar représentatives de la détection de véhicules sur l'axe routier, le deuxième capteur de télédétection opérant sur un deuxième champ de détection de l'axe routier , le champ de détection radar et le deuxième champ de détection étant au moins partiellement superposés,
dans lequel le second capteur de télédétection est un capteur optique émettant un flux de données optiques représentatives de la détection de véhicules sur l'axe routier, ledit capteur optique étant un capteur optique temps de vol ou capteur optique d'images ,
le procédé comprenant, de manière continument répétée pour une pluralité de trames successives :
- un recalage temporel et une mise en correspondance spatiale dans un repère spatial commun fixe des données radar et des données optiques pour obtenir un ensemble de points de mesure affectés chacun avec des premières caractéristiques dérivées des données radar comprenant des mesures de positions et des mesures de vitesse, et des deuxièmes caractéristiques dérivées des données optiques, les deuxièmes caractéristiques comprenant au moins des mesures de positions,
- détermination de pistages radar de véhicule à partir des premières caractéristiques dérivées des données radar et de pistages optiques de véhicule à partir des deuxièmes caractéristiques dérivées des données optiques comprenant :
   - une première segmentation regroupant en premiers agrégats des points de mesure présentant des premières caractéristiques dérivées des données radar évoluant de façon similaire sur plusieurs trames consécutives, le suivi dans le temps d'un premier agrégat formant un pistage radar de véhicule (3, 4),
   - une deuxième segmentation regroupant en deuxièmes agrégats des points de mesure présentant des deuxièmes caractéristiques dérivées des données optiques évoluant de façon similaire sur plusieurs trames consécutives, le suivi dans le temps d'un deuxième agrégat formant un pistage optique de véhicule (3, 4),
      - comparaison de similarité entre les pistages radar de véhicule et les pistages optiques de véhicule, la comparaison de similarité étant basée au moins sur la présence de points de mesure communs sur plusieurs trames consécutives, et mise en correspondance de pistages radars et de pistages optiques similaires,
- élimination des pistages radar de véhicule pour lesquels aucun pistage optique de véhicule n'est similaire pour ne conserver que les pistages radar de véhicule pour lesquels au moins un pistage optique de véhicule est similaire,
le procédé comprenant le contrôle d'un paramètre dérivé de premières caractéristiques d'un pistage radar de véhicule conservé,
et dans lequel, suite à la comparaison de similarité entre les pistages radar de véhicule et les pistages optiques de véhicule, lorsqu'un pistage optique de véhicule n'a pas de pistage radar de véhicule similaire, le paramètre contrôlé est dérivé de premières caractéristiques dérivées des données radar correspondant à des points de mesure du deuxième agrégat dudit pistage optique.

Le procédé est avantageusement complété par les caractéristiques suivantes, prises seules ou en quelconque de leurs combinaisons techniquement possibles :
- le système de contrôle de véhicules 1 est disposé fixe en dehors des voies de circulation de l'axe routier, à au moins 0,5m du bord d'une voie de circulation et à une hauteur supérieure à 1,2 m d'une surface desdites voies de circulation ;
- les deuxièmes caractéristiques d'un pistage optique de véhicule comprennent des dimensions du véhicule, le contrôle d'un paramètre comprenant l'affectation, sur la base des dimensions affectées audit véhicule, d'une classe de dimension audit pistage optique de véhicule et/ou à un pistage radar de véhicule conservé similaire audit pistage optique de véhicule, le paramètre étant contrôlé en fonction de la classe de dimension ;
- le paramètre contrôlé est dérivé de premières mesures de vitesse déterminées au moyen du radar ;
- suite à la comparaison de similarité entre les pistages radar de véhicule et les pistages optiques de véhicule, un pistage radar de véhicule est maintenu, lorsque ledit pistage radar de véhicule avait précédemment un pistage optique de véhicule similaire ;
- le capteur optique est un capteur optique d'images acquérant des images du deuxième champ de détection de l'axe routier, et l'émission du flux de données optiques représentatives de la détection de véhicules sur l'axe routier comprend une analyse des images acquises impliquant une reconnaissance de forme afin de mettre en œuvre une deuxième segmentation regroupant en deuxièmes agrégats des points de mesure présentant des deuxièmes caractéristiques évoluant de façon similaire dans le temps ; ou
- le capteur optique est un capteur lidar.

L'invention concerne également un système de contrôle de véhicules comprenant au moins un capteur radar et un second capteur de télédétection différent du capteur radar, le second capteur de télédétection étant un capteur optique, ledit capteur optique étant un capteur optique temps de vol ou capteur optique d'images, le système de contrôle de véhicules étant configuré pour être disposé de manière fixe aux abords d'un axe routier comprenant au moins deux voies de circulation, le capteur radar étant configuré pour opérer sur un champ de détection radar de l'axe routier couvrant au moins deux voies de circulation et pour émettre un flux de données radar représentatives de la détection de véhicules sur l'axe routier, le capteur optique étant configuré pour opérer sur un deuxième champ de détection de l'axe routier couvrant au moins deux voies de circulation et pour émettre un deuxième flux de données optiques représentatives de la détection de véhicules sur l'axe routier, le champ de détection radar et le deuxième champ de détection étant au moins partiellement superposés, le système de contrôle de véhicules étant configuré pour mettre en œuvre le procédé selon l'invention.

### Présentation des figures

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels :
la figure 1 montre un exemple de disposition d'un système contrôle de véhicules aux abords de voies de circulation d'un axe routier où passent des véhicules, selon un mode de réalisation possible de l'invention,

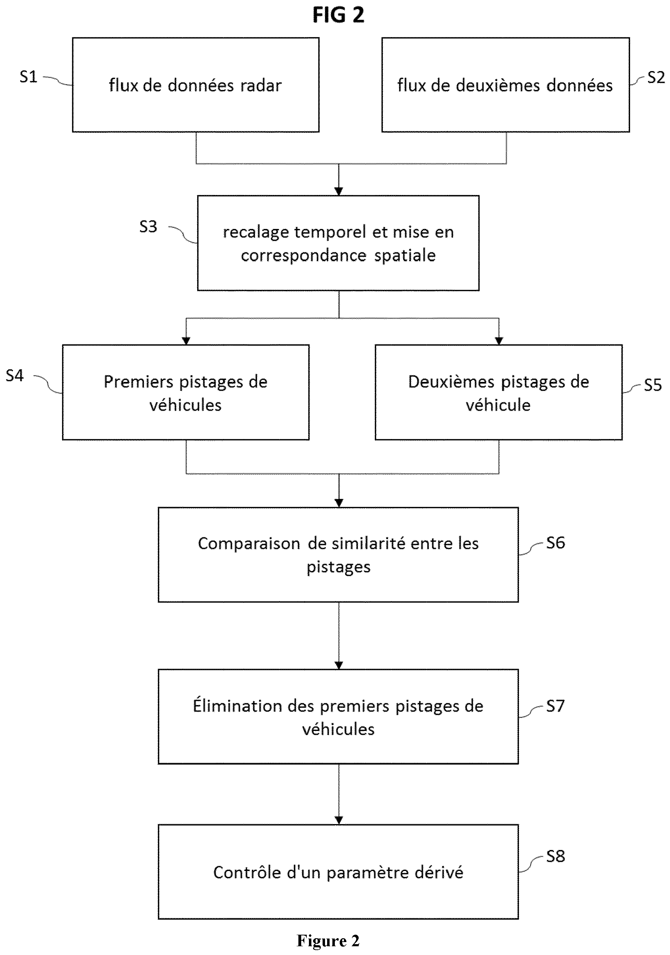

la figure 2 est un diagramme montrant les principales étapes d'un procédé de de contrôle de véhicules selon un mode de réalisation possible de l'invention.

### Description détaillée

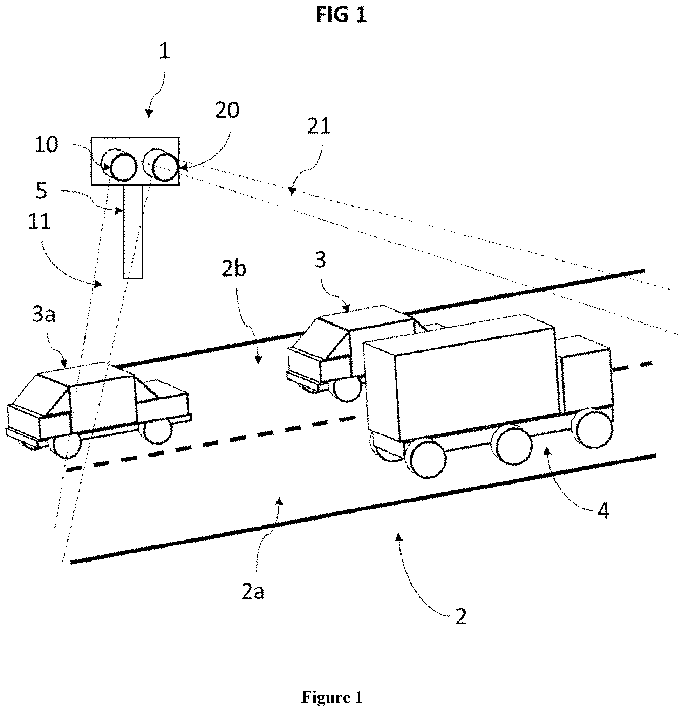

En référence à la figure 1, un système de contrôle de véhicules 1 est positionné fixe aux abords d'un axe routier 2 permettant la circulation de véhicules. L'axe routier 2 peut être tout espace de circulation sur lequel des véhicules 3, 4 circulent : autoroute, rue, etc.. De préférence, l'axe routier 2 comprend au moins deux voies de circulation 2a, 2b permettant la circulation de véhicules 3, 4 entre leurs bords. L'axe routier 2 est délimité par un revêtement de surface spécialement conçu pour la circulation routière, typiquement un béton bitumineux. Les voies de circulation 2a, 2b sont généralement délimitées par un marquage routier à la surface de la route, c'est-à-dire un balisage constitué de signes visuels apposés à la surface de la route.

Le système de contrôle de véhicules 1 est positionné fixe par rapport aux voies de circulation 2a, 2b de l'axe routier 2, et en dehors des voies de circulation 2a, 2b de l'axe routier 2. De préférence, le système de contrôle de véhicules 1 se trouve à minimum 0,5 m du bord d'une voie de circulation dont il contrôle la circulation des véhicules, afin de disposer d'un recul suffisant, et de préférence à au moins 1 m du bord de la voie de circulation. De préférence également, le système de contrôle de véhicules 1 est disposé à une hauteur supérieure à 1, 2 m de la surface des dites voies de circulation 2a, 2b, de préférence à une hauteur supérieure à 2 m de la surface des dites voies de circulation 2a, 2b, et de préférence encore supérieure à 3 m. A cet effet, le système de contrôle de véhicules 1 peut être disposé sur un mât 5 comme dans l'exemple illustré. La disposition en hauteur du système de contrôle de véhicules 1 permet de limiter le masquage des champs de détection des capteurs du système de contrôle de véhicules 1 au moins par la plupart des véhicules légers, telle que la voiture 3 qui se trouve devant le camion 4 dans l'exemple.

Le système de contrôle de véhicules1 comprend un capteur radar 10 opérant sur un champ de détection radar 11 de l'axe routier 2, couvrant de préférence au moins deux voies de circulation, dont les limites sont représentées sur la figure 1 par des lignes en pointillés. Le radar 10 est configuré pour émettre un flux de données radar représentatives de la détection de véhicules 3, 4 sur l'axe routier 2. Comme expliqué plus haut, le radar 10 exploite au moins l'effet Doppler afin de déterminer au moins des mesures de vitesse. De préférence, le radar exploite également une technologie temps de vol, qui permet de déterminer la distance entre le radar 10 et le véhicule cible qui a réfléchie l'onde, apportant ainsi une information de position. De préférence, le radar 10 est un radar hyperfréquence, avec des ondes électromagnétiques émises avec une fréquence supérieure à 1 GHz.

Le système de contrôle de véhicules 1 comprend également au moins un deuxième capteur de télédétection 20 opérant sur un deuxième champ de détection 21 de l'axe routier 2. Le deuxième capteur de télédétection 20 est configuré pour émettre un deuxième flux de données représentatives de la détection de véhicules 3, 4 sur l'axe routier 2. Le champ de détection radar 11 et le deuxième champ de détection 21 sont au moins partiellement superposés, avec au moins la majorité du deuxième champ de détection 21 dans le champ de détection radar 11. De préférence, le champ de détection radar 11 et le deuxième champ de détection 21 se recouvrent au maximum au moins sur la portion des voies de circulation 2a, 2b de l'axe routier 2 dont la circulation doit être contrôlée, l'idée étant qu'un véhicule 3, 4 y circulant se retrouve à la fois dans le champ de détection radar 11 et le deuxième champ de détection 21, afin qu'à la fois les données radar et les deuxièmes données puissent être susceptibles d'être représentatives de la détection dudit véhicule 3, 4.

Le second capteur de télédétection 20 est un capteur optique, et qui émet donc des données optiques. Ce capteur optique 20 peut être un capteur optique temps de vol, comme par exemple un lidar, ou un capteur optique d'images acquérant des images bidimensionnelles du champ de détection, comme par exemple un capteur CCD ou CMOS. Le capteur optique 20 est configuré pour qu'au moins des mesures de positions puissent être dérivées du flux de données optique. De préférence, des mesures de vitesse peuvent également être dérivées du flux de données optiques.

Le système de contrôle de véhicules 1 comprend également des composants permettant de traiter des données, tel qu'un processeur, une mémoire, des bus de communication, etc. Dans la mesure où ces autres composants ne sont spécifiques que par le procédé qu'ils mettent en œuvre et par les instructions qu'ils contiennent, ils ne seront pas détaillés dans la suite.

Le procédé met en œuvre, de manière continument répétée pour une pluralité de trames successives, plusieurs étapes détaillées ci-dessous. Le procédé de contrôle de véhicules étant un processus continu, le système de contrôle de véhicules 1 met typiquement en œuvre le procédé pendant plusieurs jours d'affilé, sans interruption.

Ainsi, de façon continument répétée, le capteur radar 10 émet (étape S1) un flux de données radar représentatives de la détection de véhicules 3, 4 sur l'axe routier 2 par le radar 10. Simultanément, le capteur optique émet (étape S2) un flux de données optiques représentatives de la détection de véhicules 3, 4 sur l'axe routier 2. Il est à noter que le flux de données (radar ou optique) est émis même lorsqu'aucun véhicule 3, 4 n'est présent sur l'axe routier 2, mais la détection de l'absence de véhicules 3, 4 sur l'axe routier 2 correspond aussi à une information de détection de véhicules.

Ces flux de données obtenus par le système de contrôle de véhicules 1 ne sont généralement pas synchrones, les fréquences d'acquisition différant généralement entre le radar 10 et le capteur optique 20. En particulier, le radar 10 devant gérer beaucoup d'échos dans un champ de détection large, la cadence de rafraîchissement est en général plus limitée que celle d'un capteur optique 20. De même, le champ de détection radar 11 et le deuxième champ de détection 21 ne sont pas exactement les mêmes, ne serait-ce que parce que le capteur radar 10 et le capteur optique 20 sont généralement disposés à des emplacements différents dans le système de contrôle de véhicules 1. Le procédé comprend donc (étape S3) un recalage temporel dans des trames synchronisées et une mise en correspondance spatiale dans un repère spatial commun spatialement fixe, de préférence lié à l'axe routier 2, des données radar et des données optiques. Le recalage temporel consiste à faire correspondre temporellement les données radar et les données optiques, par exemple en opérant une sélection parmi des données, et/ou une interpolation sur des données. La mise en correspondance spatiale dans un repère spatial vise à faire correspondre spatialement les mesures de position dérivées des données optiques et des données radar. Le repère lié à l'axe routier 2 est de préférence bidimensionnel, et est par exemple la surface de l'axe routier 2, où s'organisent spatialement les véhicules 3, 4, et qui peut être dotée de coordonnées (x,y). Il s'agit typiquement d'un plan, ou d'une surface approximant un plan.

Il est possible de convertir les données afin de les exprimer dans ce repère spatial. Par exemple, pour le radar 10, les données acquises comprennent une distance et une position angulaire dans un repère polaire par rapport au radar 10. Afin de les exprimer dans le repère spatial lié à l'axe routier, il suffit de connaître la position du radar dans ce repère spatial, par exemple au moyen de paramètres de position renseignés lors de l'installation du système de contrôle de véhicules 1. Il s'agit par exemple de la hauteur verticale du radar 10 par rapport à la surface de l'axe routier 2, et de l'orientation du champ de détection radar par rapport aux voies de circulation 2a, 2b. Il en va de même pour les données optiques issues du capteur optique 20. Puisque le repère spatial est le même pour les données radar et des données optiques, elles sont désormais spatialement mises en correspondance.

On obtient alors un ensemble de points de mesure affectés chacun avec des premières caractéristiques dérivées des données radar et des deuxièmes caractéristiques dérivées des données optiques. Les premières caractéristiques, issues des données radar, comprennent des mesures de positions et des mesures de vitesse. Les deuxièmes caractéristiques, issues des données optiques comprennent au moins des mesures de positions, et de préférence également des mesures de vitesse.

De telles caractéristiques sont rendues immédiatement disponibles pour certains capteurs. Par exemple, les données radar comprennent des mesures de vitesse. Il peut parfois être nécessaire de mettre en œuvre un traitement avancé des données acquises pour pouvoir émettre le flux de données. Par exemple, dans le cas où le capteur optique 20 est un capteur optique d'images acquérant des images du deuxième champ de détection 21 de l'axe routier 2, il peut y avoir une analyse des images acquises impliquant une reconnaissance de forme afin de pouvoir déterminer, en exploitant plusieurs trames successives, des caractéristiques telles qu'une position associée aux points de mesure. Avantageusement, la reconnaissance de forme peut être mise en œuvre par un réseau de neurones.

Le procédé comprend ensuite la détermination de pistages de véhicule, plus communément désigné sous le terme anglais de "tracking", qui vise à suivre individuellement un véhicule dans le temps, et plus précisément à suivre dans le temps des caractéristiques liées audit véhicule, telles que sa vitesse ou sa position. Des pistages radar de véhicule sont déterminés (étape S4) à partir des premières caractéristiques dérivées des données radar, et des pistages optiques de véhicule sont déterminés (étape S5) à partir des deuxièmes caractéristiques dérivées des données optiques.

La mise en place des pistages se fait de façon conventionnelle. Typiquement, pour déterminer des pistages radar de véhicule, il est procédé à une première segmentation regroupant en premiers agrégats des points de mesure présentant des premières caractéristiques évoluant de façon similaire sur plusieurs trames consécutives. Pour déterminer des pistages optiques de véhicule, il est procédé à une deuxième segmentation regroupant en deuxièmes agrégats des points de mesure présentant des deuxièmes caractéristiques évoluant de façon similaire sur plusieurs trames consécutives, le suivi dans le temps d'un deuxième agrégat formant un pistage optique de véhicule. Par exemple, les pistages des véhicules peuvent faire appel à un filtre de Kalman.

Il est à noter que le nombre de pistages de véhicule est variable en fonction de la circulation des véhicules 3, 4 sur l'axe routier 2. Il est à noter qu'en absence de véhicules 3, 4 sur l'axe routier 2, le nombre de pistage peut être nul. Le pistage de véhicule peut être subordonné à des conditions portant sur les caractéristiques des points de mesure, comme par exemple une vitesse non nulle ou des mesures de position différentes de celles que renvoie l'axe de circulation 2 en l'absence de circulation. Il s'agit en effet de différencier les véhicules 3, 4 de l'environnement plus ou moins statique apparaissant dans les champs de détection : panneau de signalisation, bordure de route, végétation, etc. Le pistage de véhicule peut d'ailleurs être mis en œuvre sur une partie seulement des points de mesure, correspondant aux espaces des champs de détection 11, 21 où sont susceptibles d'apparaître des véhicules 3, 4.

Le pistage d'un véhicule est associé à des paramètres du véhicule 3, 4, dérivés des caractéristiques des points de mesure de l'agrégat. Par exemple, une vitesse peut être attribuée au véhicule 3, 4, typiquement à partir d'une moyenne ou autre valeur dérivée des vitesses affectées à des points de mesure correspondant audit véhicule 3, 4. Outre des paramètres dérivés des caractéristiques des points de mesure, il est possible de déterminer des paramètres affectés à un véhicule 3, 4 pisté qui n'existent que par l'agrégat de points de mesure, par exemple par la distribution spatiale des points de mesure définies par les mesures de position. Il est notamment possible d'associer des dimensions telles que la longueur ou la largeur du véhicule qui est pisté, à partir de l'étendue de la distribution spatiale des points de mesure. Il est ensuite possible d'affecter, sur la base des dimensions affectées audit véhicule, une classe de dimension à un pistage de véhicule. Ainsi, les classes peuvent distinguer des véhicules poids-lourds comme un camion 4 et des véhicules légers comme une voiture 3 sur la base de leurs dimensions respectives, ces deux classes de véhicules n'étant pas soumises aux mêmes limitations de vitesse.

Il est ensuite procédé à une comparaison (étape S6) de similarité entre les pistages radar de véhicule et les pistages optiques de véhicule. Typiquement, chaque pistage radar de véhicule est comparé à chaque pistage optique de véhicule, quoique la comparaison puisse ne porter que sur une sélection de pistages. Cette comparaison de similarité est basée au moins sur la présence de points de mesure communs sur plusieurs trames consécutives entre un pistage radar et un pistage optique de véhicule. Des points de mesures sont considérés comme communs lorsque lesdits points de mesure communs présentent une correspondance spatiale et temporelle qui permet de considérer que lesdits points de mesure communs rendent compte d'une même situation sur la voie de circulation, au même moment et au même endroit, même s'ils ne coïncident pas exactement spatialement.

La présence de points de mesure commun montre une coïncidence de position entre le véhicule 3, 4 pisté par un pistage radar et le véhicule 3, 4 pisté par un pistage optique. La comparaison peut porter directement sur des caractéristiques de position de points de mesure, ou sur des paramètres de position respectifs affectés aux véhicules des pistages comparés, ces paramètres étant dérivés des caractéristiques des points de mesure. La comparaison de similarité vise à donc à établir qu'il s'agit du même véhicule 3, 4. Un pistage radar de véhicules et un pistage optique de véhicule sont donc similaires lorsqu'il est estimé que le même véhicule est pisté. Il suffit par exemple d'utiliser des seuils de différence entre caractéristiques de position de points de mesure, ou entre les paramètres de position respectifs affectés aux véhicules des pistages comparés. De préférence, d'autres caractéristiques ou paramètres sont pris en compte, en fonction de ceux disponibles. En particulier, la comparaison de similarité peut également être basée sur le fait que des vitesses peu différentes sont affectées au véhicule 3, 4 pisté par un pistage radar et au véhicule 3, 4 pisté par un pistage optique.

Lors de cette comparaison de similarité, il est donc déterminé soit qu'un pistage radar de véhicules et un pistage optique de véhicule sont similaires, soit que ledit pistage radar de véhicules et ledit pistage optique de véhicule sont similaires. De préférence, une mise en correspondance de pistages radars et de pistages optiques similaires est effectuée. Une relation est donc établie entre un pistage radar et un pistage optique similaire. De préférence, la comparaison est faite avec des critères permettant de s'assurer qu'un pistage ne peut être similaire qu'à un seul autre pistage, sauf afin de mettre en évidence un problème de mesure. En effet, un pistage est représentatif de la présence individuelle d'un véhicule 3, 4, et la présence individuelle d'un véhicule 3, 4 ne peut être similaire à la présence d'un autre véhicule différent. Il arrive cependant qu'un pistage radar de véhicules n'ait pas de pistage optique de véhicule similaire, ou au contraire qu'un pistage optique de véhicule n'ait pas de pistage radar de véhicules similaire.

En effet, les caractéristiques différentes des capteurs à l'origine des données utilisées pour établir les pistages de véhicule entraînent des variations dans ces données, et donc dans les capacités d'établir les pistages de véhicule. Comme expliqué plus haut, le capteur radar 10 peut, en raison des rebonds multiples des ondes causant de fausses détections, faire naître de faux pistages radar. A l'inverse, l'inefficacité de la technologie Doppler sur des véhicules 3, 4 à l'arrêt peut entraîner la perte du pistage d'un véhicule à l'arrêt, et donc pourtant présent. De même, un pistage radar nécessite un nombre relativement élevé de points de mesure sur plusieurs trames pour établir un pistage radar de manière fiable, ce qui peut retarder l'établissement d'un pistage radar lorsqu'un véhicule apparaît dans le champ de détection radar 11, comme c'est le cas de la deuxième voiture 3a sur l'exemple de la figure 1. Toutefois, un pistage radar est très robuste aux conditions météorologiques (pluie par exemple) ou environnementales (luminosité par exemple), de sorte qu'il peut arriver que la présence d'un véhicule 3, 4 se traduise par un pistage radar, sans pistage optique similaire car les capteurs optiques ne sont pas aussi robustes. Par ailleurs, les mesures de vitesse établies par un radar sont très précises et robustes.

Un capteur optique 20 temps de vol tel qu'un lidar peut également être sujet à de fausses détections, par exemple en cas de rebonds des ondes sur des surfaces planes réfléchissantes comme des longues flaques d'eau, une route fortement mouillée ou lors d'une pluie dense à grosse goutte. On peut aussi observer parfois des pertes de portée lors de conditions météorologiques défavorables (brouillard dense, neige ...). La portée peut aussi être affectée par la nature des surfaces des véhicules 3, 4 circulant, un faible réfléchissement limitant la portée de détection. Il peut aussi se produire des aveuglement (saturation) sur des panneaux réfléchissants ou des artéfacts créés par des catadioptres.

Un capteur optique 20 d'images requiert une calibration extrêmement précise et qui doit être renouvelée dans le temps afin de pouvoir effectuer des mesures de vitesse et de distance à partir des images acquises. Une telle calibration peut par exemple être faite avec une projection de mire ou par acquisition d'images en stéréo. Il peut donc y avoir une imprécision évoluant avec le temps. En outre, les données qui peuvent être dérivées d'un capteur optique 20 d'images peuvent être impactées négativement par les conditions météorologiques (pluie, brouillard, ...) ou une faible luminosité. En revanche, les capteurs optiques 20 permettent de continuer à détecter un véhicule à l'arrêt, et nécessitent moins de points de mesure ou de trames pour établir un pistage, ce qui permet de mettre en place rapidement un pistage optique lorsqu'un véhicule 3, 4 apparaît dans le deuxième champ de détection 21, plus rapidement qu'avec un radar 10, et donc avant qu'apparaisse le pistage radar. Aussi, le capteur optique 20 permet une détermination plus précise de caractéristiques telles que les mesures de vitesse, de position ou de dimensions.

Le radar 10 et le capteur optique 20 peuvent ainsi être considérés comme exploitant des technologies orthogonales et complémentaires, en ce que leurs défauts et imprécisions sont non seulement indépendants, mais peuvent se compenser. Ce sont ces propriétés différentes qui sont exploitées par le procédé, via la comparaison de similarité et la mise en correspondance de pistages radars et de pistages optiques similaires. Plusieurs façons de procéder permettent de tirer parti des différences entre les pistages radars et les pistages optiques.

Tout d'abord, il est possible d'éliminer (étape S7) des pistages radar de véhicule pour lesquels aucun pistage optique de véhicule n'est similaire pour ne conserver que les pistages radar de véhicule pour lesquels au moins un pistage optique de véhicule est similaire. Cette approche permet de supprimer les pistages radar qui seraient issus de fausses détection radar, causés par le rebond des ondes radar puisque ne correspondant à aucun véhicule 3, 4 pisté par un pistage optique de véhicule. Il n'est alors plus nécessaire de filtrer les pistages radars comme précédemment, améliorant ainsi la fiabilité de détection, et permettant de contrôler des véhicules 3, 4 qui n'auraient sinon pas été contrôlés en raison du filtrage de leur pistage radar. Dans l'exemple de la figure 1, la première voiture 3 et le camion 4 sont dans la même direction vue du radar 10. S'ils vont à des vitesses proches, ils donneront naissance à des pistages radar ayant des caractéristiques proches, qui auraient été supprimés lors du filtrage mis en œuvre dans l'art antérieur. Grâce au procédé proposé qui rend superflu le filtrage, les deux pistages sont conservés, et les deux véhicules peuvent être contrôlés.

Une fois que ne sont conservés que les pistages radar de véhicule pour lesquels au moins un pistage optique de véhicule est similaire, il est mis en œuvre le contrôle (étape S8) d'un paramètre dérivé de premières caractéristiques d'un pistage radar de véhicule conservé. De préférence, les premières caractéristiques utilisées pour le contrôle sont au moins les mesures de vitesse, obtenues par le radar, et le paramètre est donc la vitesse du véhicule 3, 4 pisté par un pistage radar de véhicule conservé. En effet, comme expliqué plus haut, le radar permet d'obtenir des mesures de vitesse d'une grande précision, dont l'exploitation permet de se contenter de marges très faibles et donc permet de mettre en œuvre un contrôle de véhicules avec une grande fiabilité et précision. Cette approche vise donc à pouvoir exploiter la précision du radar sur les mesures de vitesse tout en évitant les désavantages liés à la possibilité de faux pistages radar.

Il est également possible de compenser les désavantages du radar concernant les véhicules 3, 4 à l'arrêt. A cet effet, à la suite de la comparaison de similarité entre les seuls pistages radar de véhicule et les pistages optiques de véhicule (étape S6), un pistage radar de véhicule peut être maintenu lorsque ledit pistage radar de véhicule avait précédemment un pistage optique de véhicule similaire. En effet, le pistage optique n'est pas affecté par un véhicule 3, 4 à l'arrêt, en raison du maintien des mesures de position. Lorsqu'un véhicule 3, 4 circule dans les champs de détection 11, 21, un pistage radar dudit véhicule 3,4 et un pistage optique dudit véhicule 3,4, similaires, sont mis en correspondance. L'arrêt du véhicule 3,4 dans les champs de détection 11, 21 peut entraîner l'arrêt du pistage radar de véhicules en raison de la disparition de l'effet Doppler, tandis que le pistage optique continue, celui-ci n'exploitant pas l'effet Doppler. Dans le cadre du procédé, il est possible de forcer le maintien du pistage radar grâce à la persistance du pistage optique similaire. Il n'est alors pas nécessaire de mettre en œuvre un recollement dans le temps les phases d'arrêt et de redémarrage du véhicule sur la base des seules données radar, peu robustes, et de pouvoir quand même exploiter les premières caractéristiques d'un pistage radar de véhicule ainsi conservé.

En outre, il est à noter que si les mesures de vitesse utilisées pour le contrôle de la vitesse sont de préférence celles d'un pistage radar, les mesures de position utilisées pour le contrôle du véhicule 3, 4, par exemple afin de faire respecter une interdiction d'arrêt dans une zone spécifique de l'axe routier 2, sont de préférence les mesures de position d'un pistage optique. Les capteurs optiques sont effet plus précis et robustes pour déterminer ces mesures de position.

De même, comme évoqué précédemment, les capteurs optiques permettent une meilleure précision pour déterminer les dimensions du véhicule 3, 4 pisté. Par conséquent, il est possible d'affecter, sur la base des dimensions affectées audit véhicule 3, 4, d'une classe de dimension audit pistage optique de véhicule et/ou à un pistage radar de véhicules conservé similaire audit pistage optique de véhicule. Le paramètre du véhicule est alors contrôlé en fonction de la classe de dimension. Typiquement, le contrôle de la vitesse, dérivé de premières caractéristiques d'un pistage radar de véhicule conservé, consiste à comparer la vitesse du véhicule avec des limites de vitesse qui sont déterminées par la classe de dimension. Il peut également s'agir d'autres paramètres tels que la position, de préférence dérivée de deuxièmes caractéristiques, comme par exemple afin de faire respecter une interdiction de circulation d'une classe de véhicule dans une zone particulière (interdiction de doubler pour les camions 4 par exemple).

Un autre désavantage du radar 10 pouvant être compensé est le retard relatif du radar 10 pour établir un pistage radar par rapport à un pistage optique. A cet effet, suite à la comparaison de similarité entre les seuls pistages radar de véhicule et les pistages optiques de véhicule, lorsqu'un pistage optique de véhicule n'a pas de pistage radar similaire, le paramètre contrôlé peut être dérivé de premières caractéristiques correspondant à des points de mesure du deuxième agrégat dudit pistage optique. Ainsi, parmi les premières caractéristiques dérivées des données radar, celles qui correspondent à des points de mesure du deuxième agrégat dudit pistage optique sont utilisées, malgré l'absence de pistage radar. Typiquement, il s'agit de pouvoir exploiter les mesures de vitesse radar avant même la mise en place d'un pistage radar. Le paramètre contrôlé correspond alors à une vitesse dérivée des mesures de vitesse radar, par exemple une moyenne. Dans la mesure où cette approche vise à permettre d'exploiter au plus vite les premières caractéristiques lors de l'apparition d'un véhicule 3, 4 dans les champs de détection 11, 21, il est possible de conditionner cette approche à une durée limite après l'apparition du pistage optique. Cette approche est particulièrement avantageuse dans le cas d'une application en contrôle de franchissement de feux où la ligne d'effet des feux est proche, ou pour un contrôle de vitesse par l'arrière d'un véhicule à haute vitesse. Attendre la mise en place d'un pistage radar pourrait alors avoir pour conséquence un contrôle trop tardif pour être efficace.

Dans la description ci-dessus, il a été fait mention d'un capteur radar 10 et d'un deuxième capteur de télédétection 20, qui donnent naissance à un pistage radar de véhicule et à un pistage optique de véhicule. Il est toutefois possible de prévoir, outre le radar 10, deux capteurs optiques 20 donnant naissance à deux pistages optiques. Le procédé est alors mis en œuvre de façon similaire à ce qui est décrit ci-dessus, avec une comparaison de similarité cherchant à mettre en correspondance un pistage radar, et deux pistages optiques obtenus au moyen d'un premier capteur optique et d'un second capteur optique. De préférence, les deux capteurs optiques 20 sont alors de types différents, typiquement avec un capteur optique temps de vol et un capteur optique d'images.

L'invention n'est pas limitée au mode de réalisation décrit et représenté aux figures annexées. Des modifications restent possibles, notamment du point de vue de la constitution des divers caractéristiques techniques ou par substitution d'équivalents techniques, sans sortir pour autant du domaine de protection de l'invention.

## Revendications

1. Procédé de contrôle de véhicules (3, 4) sur un axe routier (2) comprenant au moins deux voies de circulation (2a, 2b), par un système de contrôle de véhicules (1) disposé fixe et comprenant au moins un capteur radar (10) et un second capteur de télédétection (20) différent du capteur radar (10), le capteur radar (10) opérant sur un champ de détection radar (11) de l'axe routier couvrant au moins deux voies de circulation et émettant un flux de données radar représentatives de la détection de véhicules (3, 4) sur l'axe routier (2), le deuxième capteur de télédétection (20) opérant sur un deuxième champ de détection (21) de l'axe routier (2), le champ de détection radar (11) et le deuxième champ de détection (21) étant au moins partiellement superposés,
dans lequel le second capteur de télédétection (20) est un capteur optique émettant un flux de données optiques représentatives de la détection de véhicules (3,4) sur l'axe routier (2), ledit capteur optique (20) étant un capteur optique temps de vol ou capteur optique d'images ,
le procédé comprenant, de manière continument répétée pour une pluralité de trames successives :
- a) un recalage temporel et une mise en correspondance spatiale (S3) dans un repère spatial commun fixe des données radar et des données optiques pour obtenir un ensemble de points de mesure affectés chacun avec des premières caractéristiques dérivées des données radar comprenant des mesures de positions et des mesures de vitesse, et des deuxièmes caractéristiques dérivées des données optiques, les deuxièmes caractéristiques comprenant au moins des mesures de positions,
- b) détermination de pistages radar de véhicule (S4) à partir des premières caractéristiques dérivées des données radar et de pistages optiques de véhicule (S5) à partir des deuxièmes caractéristiques dérivées des données optiques comprenant :
- b1) une première segmentation regroupant en premiers agrégats des points de mesure présentant des premières caractéristiques dérivées des données radar évoluant de façon similaire sur plusieurs trames consécutives, le suivi dans le temps d'un premier agrégat formant un pistage radar de véhicule (3, 4),
- b2) une deuxième segmentation regroupant en deuxièmes agrégats des points de mesure présentant des deuxièmes caractéristiques dérivées des données optiques évoluant de façon similaire sur plusieurs trames consécutives, le suivi dans le temps d'un deuxième agrégat formant un pistage optique de véhicule (3, 4),
- c) comparaison de similarité entre les pistages radar de véhicule et les pistages optiques de véhicule, la comparaison de similarité étant basée au moins sur la présence de points de mesure communs sur plusieurs trames consécutives, et mise en correspondance de pistages radars et de pistages optiques similaires,
- d) élimination des pistages radar de véhicule pour lesquels aucun pistage optique de véhicule n'est similaire pour ne conserver que les pistages radar de véhicule pour lesquels au moins un pistage optique de véhicule est similaire,
le procédé comprenant :
e) le contrôle d'un paramètre dérivé de premières caractéristiques d'un pistage radar de véhicule conservé,
et dans lequel, suite à la comparaison de similarité entre les pistages radar de véhicule et les pistages optiques de véhicule, lorsqu'un pistage optique de véhicule n'a pas de pistage radar de véhicule similaire, le paramètre contrôlé est dérivé de premières caractéristiques dérivées des données radar correspondant à des points de mesure du deuxième agrégat dudit pistage optique.

2. Procédé selon la revendication 1, dans lequel le système de contrôle de véhicules 1 est disposé fixe en dehors des voies de circulation (2a, 2b) de l'axe routier (2), à au moins 0,5m du bord d'une voie de circulation (2a, 2b) et à une hauteur supérieure à 1,2 m d'une surface desdites voies de circulation (2a, 2b).

3. Procédé selon l'une des revendications précédentes, dans lequel les deuxièmes caractéristiques d'un pistage optique de véhicule comprennent des dimensions du véhicule (3, 4), le contrôle d'un paramètre comprenant l'affectation, sur la base des dimensions affectées audit véhicule (3,4), d'une classe de dimension audit pistage optique de véhicule et/ou à un pistage radar de véhicule conservé similaire audit pistage optique de véhicule, le paramètre étant contrôlé en fonction de la classe de dimension.

4. Procédé selon l'une quelconque des revendications précédentes, dans lequel le paramètre contrôlé est dérivé de premières mesures de vitesse déterminées au moyen du radar.

5. Procédé selon l'une quelconque des revendications précédentes, dans lequel, suite à la comparaison de similarité entre les pistages radar de véhicule et les pistages optiques de véhicule, un pistage radar de véhicule est maintenu, lorsque ledit pistage radar de véhicule avait précédemment un pistage optique de véhicule similaire.

6. Procédé selon l'une quelconque des revendications précédentes, dans lequel le capteur optique (20) est un capteur optique d'images acquérant des images du deuxième champ de détection (21) de l'axe routier, et l'émission du flux de données optiques représentatives de la détection de véhicules (3, 4) sur l'axe routier comprend une analyse des images acquises impliquant une reconnaissance de forme afin de mettre en œuvre une deuxième segmentation regroupant en deuxièmes agrégats des points de mesure présentant des deuxièmes caractéristiques évoluant de façon similaire dans le temps.

7. Procédé selon l'une des revendications 1 à 5, dans lequel le capteur optique (20) est un capteur lidar.

8. Système de contrôle de véhicules (1) comprenant au moins un capteur radar (10) et un second capteur de télédétection (20) différent du capteur radar (10), le second capteur de télédétection (20) étant un capteur optique, ledit capteur optique (20) étant un capteur optique temps de vol ou capteur optique d'images, le système de contrôle de véhicules (1) étant configuré pour être disposé de manière fixe aux abords d'un axe routier comprenant au moins deux voies de circulation (2a, 2b), le capteur radar (10) étant configuré pour opérer sur un champ de détection radar (11) de l'axe routier couvrant au moins deux voies de circulation (2a, 2b) et pour émettre un flux de données radar représentatives de la détection de véhicules (3,4) sur l'axe routier (2), le capteur optique (20) étant configuré pour opérer sur un deuxième champ de détection (21) de l'axe routier (2) couvrant au moins deux voies de circulation (2a, 2b) et pour émettre un deuxième flux de données optiques représentatives de la détection de véhicules (3, 4) sur l'axe routier (2), le champ de détection radar (11) et le deuxième champ de détection (21) étant au moins partiellement superposés, le système de contrôle de véhicules (1) étant configuré pour mettre en œuvre le procédé selon l'une quelconque des revendications précédentes.
